# EUROPEAN PATENT APPLICATION

(11) **EP 3 584 948 A1**
(43) Date of publication of application: **25.12.2019**
(21) Application number: 18178584.1
(22) Date of filing: 19.06.2018
(51) Int. Cl.: H04B 5/00

(54) **PROTOCOL DETECTION AND DECODING IN MULTIPROTOCOL TAG, AND CORRESPONDING INTEGRATED CIRCUIT**

(71) Applicant: STMicroelectronics razvoj polprevodnikov d.o.o., 1000 Ljubljana (SI)
(72) Inventor: STIGLIC, Maksimiljan, 2000 Maribor (SI); BRATUZ, Iztok, 6280 Ankaran (SI); PEVEC, Albin, 1000 LJUBLJANA (SI); BENKOVIC, Roman, 1000 LJUBLJANA (SI)
(74) Representative: Casalonga

(57) **Abstract**

A method for decoding a data stream carried by a modulated signal (SIG), said signal being modulated according to one protocol belonging to the group including protocols A and B of ISO/IEC14443 standard and protocol F of JIS.X.6319 standard, comprising:
receiving said modulated signal (SIG), detecting said protocol and decoding said data stream in accordance with said protocol using a clock signal (CLK), wherein, whatever the detected protocol, said clock signal (CLK) is a clock signal extracted from said received modulated signal (SIG).

## Description

Embodiments of the present invention are related to the field of wireless communication, especially near field communication (NFC) and, more particularly to detecting and decoding at a multiprotocol transponder or tag, the protocol used by a reader communicating with said transponder or tag.

Near field communication (NFC) is a set of standards for wireless apparatuses, in particular smartphones and similar devices, utilized to establish radio communication between two devices by touching them together or bringing them into proximity, typically at a distance of 10 cm or less.

NFC uses electromagnetic induction between two loop antennas located within each other's near field, effectively forming an air-core transformer. It operates for example at 13.56 MHz. NFC involves an initiator and a target. The initiator or reader actively generates an RF field that can power a passive target, an unpowered chip called a transponder or "tag". This enables NFC targets to take simple form factors as stickers, key fobs, or cards that do not use batteries.

The communication from the reader to the tag is effected by amplitude modulation of a carrier signal by the reader, respecting some standards.

The tag may be passive or active. In the first case, the tag does not generate electromagnetic field, whereas in the second case it generates also an electromagnetic field, and the communication between the reader and the tag uses an Active Load Modulation (ALM).

NFC technology is standardized in ISO/IEC 18 092, ISO/IEC 21 481 and NFC FORUM documents but incorporates a variety of pre-existing standards including type A protocol and type B protocol which are standardized in ISO/IEC 14 443.

Type A protocol, also known as ISO 14443A and NFC-A technology, is based on On Off Keying -OOK- modulation using modified Miller pulse position. The start of frame, called SOF symbol, is composed of one pulse only. The end of frame, EOF is marked by a non-modulated period.

Type B protocol, also known as ISO 14443B and NFC forum NFC-B technology, is based on Amplitude-Shift Keying -ASK- modulation and employs direct bit coding. The SOF symbol comprises ten to eleven low bits followed by two to three high bits. The EOF is represented by some low bits.

FeliCa protocol, also called NFC-F technology, is standardized in JIS.X.6319 and based on ASK modulation and is quite different. The data is Manchester coded on a sub-carrier clock of 212 kHz or 424 kHz. The SOF has a train of 48 or more unmodulated sub-carrier clocks. Beginning of data is marked by a first change in phase of the sub-carrier. EOF is signaled by the data.

Due to different amplitude modulation indexes, two demodulators of different structure are usually employed in known solutions: OOK and ASK demodulators.

If type B or type F protocol is detected, a usual approach to decode data sent to the tag, by type B or type F decoder, is a clock signal which has a proportional frequency to reader carrier signal frequency. Said clock signal is generated by a clock extractor which is coupled to the tag antenna coil.

However, the clock signal frequency wouldn't be proportional to reader carrier signal frequency in case type A protocol has been detected. Therefore, the clock signal cannot be used as a clock to type A decoder. An oscillator which generates a clock signal is used instead.

The disadvantage of using this concept is that the oscillator leads to an increase in cost of the implementation. It also needs to be tested which increases testing time.

There is accordingly a need to propose a solution which permits to reduce the cost of implementation of a multiprotocol detection within a tag.

Embodiments of the invention propose an architecture that uses only the clock signal extracted from the reader field to decode data received by the tag, whatever the protocol A, B or F detected.

In a first aspect, a method is proposed for decoding a data stream carried by a modulated signal, said signal being modulated according to one protocol belonging to the group including protocols A and B of ISO/IEC14443 standard and protocol F of JIS.X.6319 standard, comprising:
receiving said modulated signal, detecting said protocol and decoding said data stream in accordance with said protocol using a clock signal.

According to this aspect, whatever the detected protocol, said clock signal is a clock signal extracted from said received modulated signal.

In other words, only the extracted clock signal is used to decode said data stream whatever the detected protocol.

According to one embodiment, detecting said protocol comprises performing on said modulated signal
an Amplitude Shift Keying -ASK- demodulation to provide a first signal and
an On Off Keying -OOK- demodulation to provide a second signal.

Said first signal has transitions between a first state, for example "1" and a second state, for example "0", if said modulated signal is modulated according to the protocol A, B or F.

Said second signal has transitions between said first state and said second state if said modulated signal is modulated according to the protocol A or eventually according to the protocol F.

Said protocol is detected from both first and second signals.

The ASK demodulation is thus performed by an ASK demodulator. Said ASK demodulator comprises for example a comparator which has a first reference voltage set so high, for example 95% of non-modulated level, that it can detect a modulation according to the three protocols A, B and F.

On the other hand, the OOK demodulation is performed by an OOK demodulator. Said OOK demodulator comprises for example a comparator which has a reference voltage set low to only detect type A protocol. But, sometimes, OOK demodulator can also detect type F protocol when the modulation according to Type F protocol is deep.

More precisely, maximum modulation index of Type F according to standard specification is 30%. At such modulating index, the modulated level is at 54% of non-modulated level. But, there are some installed readers where the modulation level is even lower for example 50% of non-modulated level. 50% is also a typical threshold of OOK demodulator in protocol detection mode which means that OOK demodulator can also detect Type F protocol.

In an embodiment, the second signal has said first state if the level of said modulated signal is greater than a first threshold and has said second state if the level of said modulated signal is lower than a second threshold, and detecting said protocol comprises stopping said clock signal if said second signal has said second state, i.e. when the OOK demodulator detects a modulation which can be either of type A or type F protocol, and not stopping the clock signal during the reception of a non-modulated signal.

For example, the first threshold is about 50% of non-modulated level and the second threshold varies to stay above the level of the modulated signal even if said level goes to zero. The second threshold helps to detect quickly the rising edge of the modulated signal.

Said first and second threshold are typically implemented in the OOK demodulator.

If OOK demodulator detects type A or type F protocol, the clock signal may be forced to a constant value, for example zero. Once the protocol is recognized, the clock remains stopped in case the protocol is type A, but in case it's a type F protocol, the clock signal is no longer stopped.

The clock signal is also never stopped during the reception of a non-modulated signal, for example during two consecutive modulated pulses.

As the clock signal is stopped when an OOK modulation is detected, detecting said protocol among protocols A and F comprises advantageously determining the duration of said non-modulated signal.

In other words, when the clock signal is stopped, protocols A and F can be distinguished by determining the duration of said non-modulated signal which isn't the same for both protocols. For example, the duration of said non-modulated signal for type A protocol when the first data bit is 0 at rate 106 kbps is about 96/fc (fc for Carrier Frequency) and the duration of said non-modulated signal for type F protocol at rate 212 kbps is about 32/fc.

If an OOK modulation is detected by the OOK demodulator and the clock signal stopped, the determination of said duration to distinguish between A and F protocol, which needs the use of a clock signal may be done once the tag receives an non-modulated signal.

Detecting protocol B or F may also comprise analyzing said first signal.

As ASK demodulators can detect A, B and F protocols. B and F protocols can be distinguished by analyzing said first signal which is the output signal of ASK demodulator. This can be done by detecting Type F preamble and Type B SOF.

As indicated above, if said second signal has said second state and F protocol has been detected, said clock signal may be no longer stopped.

In other words, if OOK demodulator which is configured to detect Type A protocol, detects type F protocol, the clock signal is no longer stopped because the clock signal frequency is proportional to the frequency of the signal induced on the antenna coil tag.

In an embodiment, decoding said data stream comprises using one decoder among three decoders respectively intended to decode said data stream modulated according to protocols A, B and F, and before detecting said protocol, the decoder intended to decode data stream modulated according to protocol A is already activated.

In an embodiment, if protocol A is detected, said clock signal is stopped during reception of modulated pulses of said modulated signal, said second signal corresponding to said modulated pulses is memorized and the corresponding decoder will decode said data stream, only during the reception of said non-modulated signal based on the memorized second signal.

Said second signal is memorized for example by a flip-flop or a latch until the clock signal reappears during the reception of said non-modulated signal.

According to another embodiment, decoding said data stream modulated according to a detected protocol comprises activating the corresponding decoder and disabling the other decoders.

If type A protocol is detected, type A decoder remains enabled and the other decoders may be kept disabled. If type B protocol is detected, type B decoder is enabled and the others decoders may be disabled and if type F protocol is detected, type F decoder is enabled and the others decoders may be disabled.

In another aspect, an integrated circuit is proposed for decoding a data stream carried by a modulated signal, said signal being modulated according to one protocol belonging to the group including protocols A and B of ISO/IEC14443 standard and protocol F of JIS.X.6319 standard, comprising:
reception means configured to receive said modulated signal, detection means configured to detect said protocol and decoding means configured to decode said data stream in accordance with said protocol using a clock signal, wherein, whatever the detected protocol, said clock signal is a clock signal extracted from said received modulated signal.

According to one embodiment, detection means comprise:
an Amplitude Shift Keying -ASK- demodulator configured to perform an ASK demodulation on said modulated signal and to provide a first signal, and
an On Off Keying -OOK- demodulator configured to perform an OOK demodulation on said modulated signal and to provide a second signal,
said first signal having transitions between a first state and a second state if said modulated signal is modulated according to the protocol A, B or F,
said second signal having transitions between said first state and said second state if said modulated signal is modulated according to the protocol A or eventually according to the protocol F, and
said detection means are configured to detect said protocol from both first and second signals.

In an embodiment, the second signal has said first state if the level of the modulated signal is greater than a first threshold and has said second state if the level of the modulated signal is lower than a second threshold, and wherein the integrated circuit further comprises a blocking module coupled to the output of said OOK demodulator and configured to stop said clock signal if said second signal has said second state, and no longer stop said clock signal during the reception of a non-modulated signal.

The blocking module is configured to force the clock signal to a constant value, for example zero.

According to another embodiment, said detection means are configured to detect said protocol among protocols A and F by determining the duration of said non-modulated signal.

In an embodiment, said detection means are configured to detect protocols B and F by analyzing said first signal.

In an embodiment, if said second signal has said second state and detections means detect F protocol, said blocking module is configured to no longer stop said clock signal.

According to another embodiment, decoding means comprise three decoders respectively intended to decode said data stream modulated according to protocols A, B and F, and said integrated circuit further comprises control means configured to activate decoder intended to decode data stream modulated according to protocol A before said detection means detect the protocol.

In an embodiment, if detection means detect A protocol, said blocking module is configured to stop said clock signal during reception of modulated pulses of said modulated signal, wherein the integrated circuit comprises memory means configured to memorize said second signal corresponding to said modulated pulses, and the corresponding decoder will decode said data stream only during the reception of said non-modulated signal based on the memorized second signal.

In an embodiment, said control means are configured to activate the decoder intended to decode said data stream according to a detected protocol and to disable the other decoders.

In another aspect, a tag is proposed including said integrated circuit.

Other features and advantages of the present invention will appear from the following description, given only by way of examples and in view of the following drawings in which:

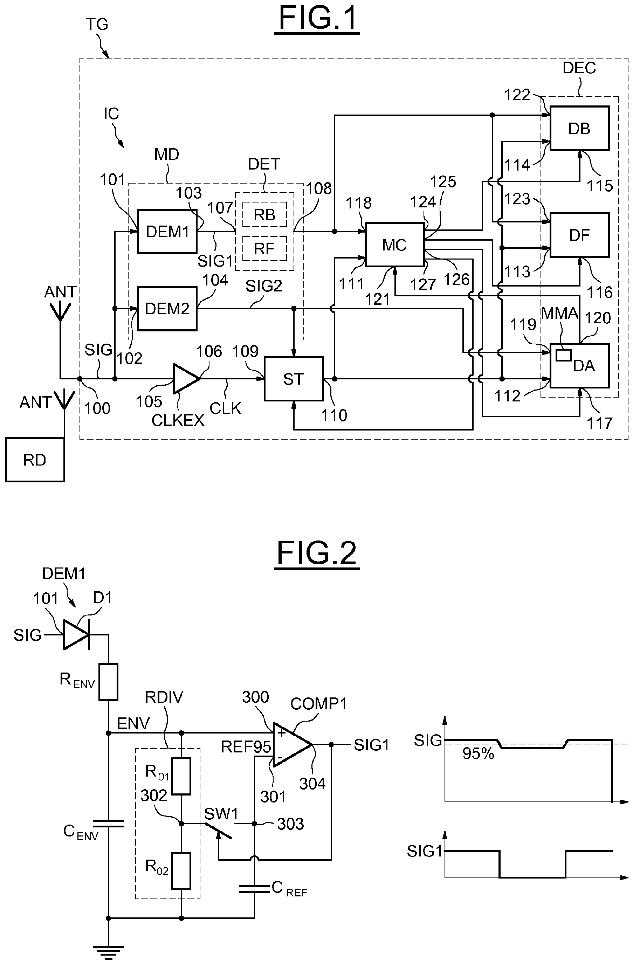

Figures 1 to 5 schematically illustrate different embodiments of the proposed invention.

Figure 1 shows an integrated circuit IC of a tag TG which comprises an input 100 coupled to coil antenna ANT of said tag TG for receiving a modulated signal SIG when said tag communicates in a contactless way with a reader RD.

The modulated signal SIG is sent to detection means MD which are configured to detect a protocol among protocols A, B and F, and then to decoding means DEC which are configured to decode data stream carried by the modulated signal SIG.

The detection means MD comprise a first demodulator DEM1 configured to receive on input 101 the modulated signal SG, and configured to perform an Amplitude Shift Keying -ASK- demodulation and to deliver by the output 103 a first signal SIG1.

In the illustrated example, said detection means MD are configured to distinguish type B and type F protocols and to deliver signals on an input 118 belonging to control means MC by an output 108.

More precisely, the detection means MD comprise a protocol detection block RB configured to detect Type B protocol SOF and a second protocol detection block RF configured to detect Type F protocol SOF.

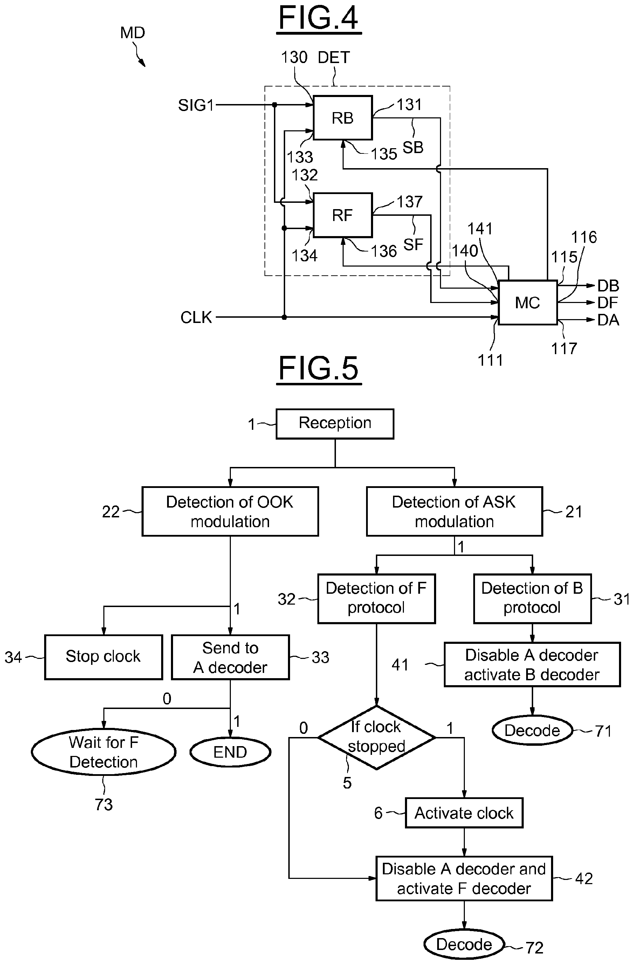

In this example, blocks RB and RF are globally referenced by a block DET and their connections will be detailed in figure 4. According to a possible variant, those blocks RB and RF could be incorporated in control means MC.

The detection means MD also comprise a second demodulator DEM2 configured to receive on input 102 the modulated signal SIG, and is configured to perform an On Off Keying -OOK- demodulation and to output a second signal SIG2 by the output 104.

Decoding means DEC comprise a first decoder DB configured to receive on input 122 the first signal SIG1 and is also configured to decode it.

Decoding means DEC also comprise a second decoder DF configured to receive on input 123 the first signal SIG1 and is also configured to decode it.

Decoding means comprise a third decoder DA initially running.

Initially running means that the decoder DA is already running before the beginning of any protocol detection process.

In this example the third decoder DA is configured to receive, in this example, on input 119 the second signal SIG2 memorized by a memory MMA inside the decoder DA, and is configured to detect type A protocol by trying to decode it.

More precisely, if the third decoder DA successfully decodes the second signal SIG2, it means that the second signal SIG2 has been modulated according to type A protocol.

On the other hand, if the third decoder DA cannot decode the second signal SIG2, it means that the second signal SIG2 has been modulated according to type F protocol.

The decoder DA is thus configured here to notify the control means CM if the decoding has succeeded or has failed, on an input 121 and from an output 120.

In the case of failure, if the block RF detects the protocol F, the decoder DA will be disabled and the decoder DF will be activated to decode the first signal SIG1.

According to a possible variant, detection means MD may comprise a third protocol detection block coupled to the demodulator DEM2 and to the decoder DA, configured to receive the second signal SIG2 and to detect the beginning of a frame of type A protocol. The third detection block can also be configured to determine the duration of said non-modulated signal in order to distinguish between Type A and Type F protocol.

For example, the duration of said non-modulated signal for type A protocol when the first data bit is 0 at rate 106 kbps is about 96/fc (fc for Carrier Frequency) and the duration of said non-modulated signal for type F protocol at rate 212 kbps is about 32/fc.

If the third detection block detects Type A protocol, the third block sends the second signal SIG2 to the decoder DA which is initially enabled to decode the second signal SIG2.

The control means MC are configured to send signals on the input 115 of said decoder DB by the output 124, on the input 116 of said decoder DF by the output 125 and on the input 117 of said decoder DA by the output 126.

The modulated signal SIG is also sent on an input 105 belonging to a clock extractor CLKEX which is configured to extract timing information from the modulated signal SIG.

The clock extractor CLKEX is configured to deliver by its output 106 a clock signal CLK.

The clock signal CLK is sent to a blocking module ST on an input 109. It's configured to deliver by an output 110, the same clock signal CLK or to stop said clock signal.

The clock signal CLK clocks the decoding process of the three decoders DB, DF and DA on the inputs 114, 113 and 112 as well as the control means CM on an input 111.

Figure 2 shows the detailed architecture of the first demodulator DEM1.

The demodulator DEM1 is a typical ASK modulation detector whom structure is known to a man skilled in the art.

The demodulator circuit comprises the input 101 for receiving the modulated signal SIG.

It also comprises a first group of components comprising a first resistor Rₑₙᵥ, a first diode D1 and a first capacitor Cₑₙᵥ, which is configured to provide an envelope signal ENV.

The signal ENV is then sent on the positive input 300 of a first comparator COMP1.

The first demodulator DEM1 also comprises a second group of components comprising a second and a third resistor R01 and R02 which form a first resistor divider RDIV, a second capacitor C_{REF} and a first switch SW1 connected between midpoint 302 of the first resistor divider RDIV and a terminal 303 of the second capacitor C_{REF}.

The second group of components is configured to provide a first reference voltage REF95 which has a reference level of about 95% of non-modulated level of the signal ENV.

The first reference voltage REF95 is set so high to detect a modulation according to the three protocols A, B and F.

The second capacitor C_{REF} buffers the first reference voltage REF95 which will be used in case the first switch SW1 is opened.

The first reference voltage REF95 is sent on the negative input 301 of the first comparator COMP1.

By referring to the right part of the figure 2, if the amplitude of the modulated signal SIG drops below the first reference voltage REF95, the first comparator COMP2 changes its state and delivers the first signal SIG1 at a low level which opens the first switch SW1. Hence, due to the use of the second capacitor C_{REF}, the first comparator COMP1 continues to compare the signal ENV to the reference voltage REF95.

This low level means that the modulation is a ASK modulation.

Once the amplitude of the modulated signal SIG becomes greater than the amplitude of the first reference voltage REF95, the first comparator COMP1 changes its state again and delivers the first signal SIG1 at a high level, which makes the switch SW1 closed.

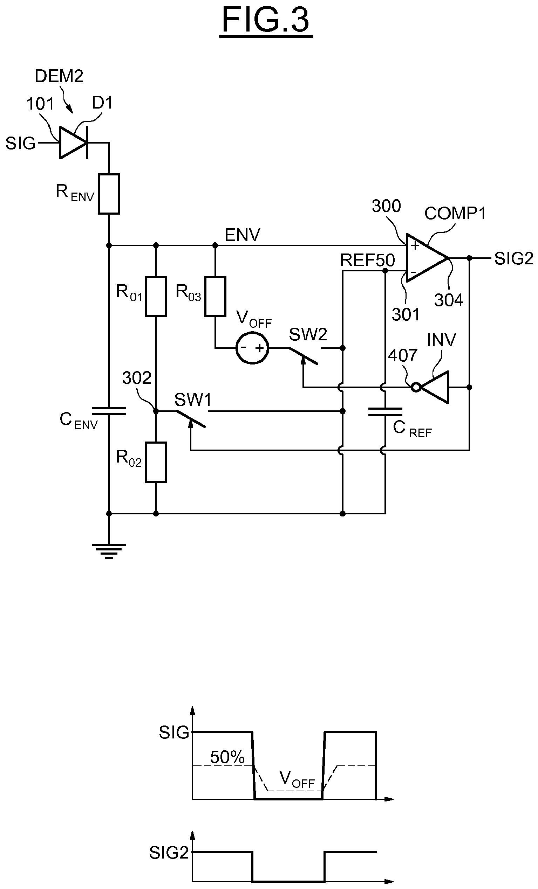

Figure 3 shows the detailed architecture of the second demodulator DEM2.

The demodulator DEM2 is a typical OOK modulation detector whom structure is known to a man skilled in the art.

The second demodulator DEM2 comprises the components introduced above and some additional components. Thus, the same references are kept to facilitate the comprehension.

It comprises, in addition an inverter INV, a fourth resistor R03 connected in series with a voltage source V_{OFF} configured to generate a DC voltage of few tens of millivolt.

A second reference voltage REF50, which represents here a first threshold of the second demodulator DEM2, is sent to the negative input 301 of the comparator COMP1.

It also comprise a second switch SW2 controlled by the output 407 of the inverter INV.

By referring to the bottom part of the figure 3, if the amplitude of the modulated signal SIG drops below the second reference voltage REF50, the comparator COMP1 changes its state and delivers the second signal SIG2 at said low level which opens the first switch SW1 and closes the second switch SW2.

Said low level means that the modulation is an OOK modulation.

As the second switch SW2 is turned on, the second reference voltage REF50 varies according to the amplitude of the signal ENV. In this case the second reference voltage REF50 represents a second threshold that varies according to the amplitude of the signal ENV.

The fourth resistor R03 and the second capacitor C_{REF} provide together a time constant .

The source voltage VOFF permits that the second reference voltage REF50 stays above the value of the amplitude of the signal ENV even if the input signal SIG goes to zero.

The second reference voltage REF50 is set lower than the reference voltage REF95 at a level which assures that modulation according to Type B protocol is never detected and modulation according to type A protocol is always detected. Sometimes modulation according to Type F protocol may also be detected at such level.

Once the amplitude of the modulated signal SIG starts to rise, the rising edge is detected, the comparator COMP1 changes its state and delivers the second signal SIG2 at a high level.

Figure 4 shows how blocks RB and RF are connected to the control means MC.

The first block RB is configured to receive on an input 130 the first signal SIG1 sent by the first demodulator DEM1 and to deliver to the control means MC via an input 141 a signal SB.

The second block RF is configured to receive on an input 132 the signal SIG1 sent by the first demodulator DEM1 and to deliver to the control means MC via an input 140 a signal SF. The clock signal CLK clocks the detection process of the two protocol detection blocks RB and RF on the inputs 133 and 134 as well as the control means CM on the input 111.

Figure 5 shows a flow diagram of the method in accordance with an embodiment of the invention.

The step 1 comprises the reception of the modulated signal SIG by the antenna coil tag, which is modulated according to one protocol among the three protocols A, B and F.

Then, two steps are performed in parallel, step 21 and step 22.

In step 21, the modulated signal SIG is sent to the first demodulator DEM1 to detect if there is an ASK modulation.

In step 22, the modulated signal SIG is sent to the second demodulator DEM2 to detect if there is an OOK modulation.

If an ASK modulation is detected by the demodulator DEM1, the first signal SIG1 is sent to the first block RB to detect, in step 31, if the modulated signal is modulated according to the type B protocol.

In parallel, the first signal SIG1 will be memorized in a flip-flop or a latch and will be sent to the second block RF to detect, in step 32, if the modulated signal is modulated according to the type F protocol.

In step 41, decoder DB is activated and the decoder DA is disabled in case protocol B has been detected. The decoder decodes said data stream in step 71.

If the second block RF detects F protocol, the control means MC verify if the clock signal CLK is stopped in step 5. If that is the case, said control means disable, in step 6, the stopping module ST to let the clock signal CLK run again.

The decoder DF is then activated in step 42 and the decoder DA disabled. Thus, the decoder will decode said data stream in step 72.

If the clock signal CLK isn't stopped, the decoder DF is activated in step 42 to decode in step 72 said data stream.

If an OOK modulation is detected, said second signal SIG2 is sent to the decoder DA in step 33 to decode said second signal which is memorized by said memory means MMA which can be a flip-flop or a latch. In parallel, the blocking module ST stops the clock signal in step 34 until the reception of a non-modulated signal.

Once said non-modulated signal received, the blocking module ST doesn't stop the clock signal and the memorized second signal SIG2 will be decoded.

If the decoder cannot decode said data stream, this means that the modulated signal SIG has been modulated according to type F protocol. The system will wait in step 73 for the detection of type F protocol by the second block RF in step 32 and then if type F protocol has been successfully detected, the clock signal is no longer stopped during said modulated pulses, as explained in step 6.

## Claims

1. A method for decoding a data stream carried by a modulated signal (SIG), said signal being modulated according to one protocol belonging to the group including protocols A and B of ISO/IEC14443 standard and protocol F of JIS.X.6319 standard, comprising:
receiving said modulated signal (SIG), detecting said protocol and decoding said data stream in accordance with said protocol using a clock signal (CLK), wherein, whatever the detected protocol, said clock signal (CLK) is a clock signal extracted from said received modulated signal (SIG).

2. The method according to claim 1, wherein detecting said protocol comprises performing on said modulated signal (SIG)
an Amplitude Shift Keying -ASK- demodulation (DEM1) to provide a first signal (SIG1) and
an On Off Keying -OOK- demodulation (DEM2) to provide a second signal (SIG2),
said first signal (SIG1) having transitions between a first state and a second state if said modulated signal (SIG) is modulated according to the protocol A, B or F,
said second signal (SIG2) having transitions between said first state and said second state if said modulated signal (SIG) is modulated according to the protocol A or eventually according to the protocol F, and
detecting said protocol from both first and second signals (SIG1, SIG2).

3. The method according to claim 2, wherein the second signal has said first state if the level of said modulated signal (SIG) is greater than a first threshold and has said second state if the level of said modulated signal (SIG) is lower than a second threshold, and detecting said protocol comprises stopping said clock signal (CLK) if said second signal (SIG2) has said second state, and not stopping the clock signal (CLK) during the reception of a non-modulated signal.

4. The method according to claim 3, wherein detecting said protocol among protocols A and F comprises determining the duration of said non-modulated signal.

5. The method according to claim 2 or 3, wherein detecting protocol B or F comprises analyzing said first signal (SIG1).

6. The method according to one of the preceding claims in combination with claim 3, wherein if said second signal (SIG2) has said second state and F protocol has been detected, said clock signal (CLK) is no longer stopped.

7. The method according to one of the preceding claims, wherein decoding said data stream comprises using one decoder among three decoders (DA, DB, DF) respectively intended to decode said data stream modulated according to protocols A, B and F, and wherein before detecting said protocol, the decoder (DA) intended to decode data stream modulated according to protocol A is already activated.

8. The method according to claim 7, wherein if protocol A is detected, said clock signal is stopped during reception of modulated pulses of said modulated signal, said second signal (SIG2) corresponding to said modulated pulses is memorized and the corresponding decoder (DA) will decode said data stream, only during the reception of said non-modulated signal based on the memorized second signal (SIG2).

9. The method according to claim 7, wherein decoding said data stream modulated according to a detected protocol comprises activating the corresponding decoder and disabling the other decoders.

10. An integrated circuit (IC) for decoding a data stream carried by a modulated signal (SIG1), said signal being modulated according to one protocol belonging to the group including protocols A and B of ISO/IEC14443 standard and protocol F of JIS.X.6319 standard, comprising:
reception means configured to receive said modulated signal, detection means (DM) configured to detect said protocol and decoding means (DEC) configured to decode said data stream in accordance with said protocol using a clock signal (CLK), wherein, whatever the detected protocol, said clock signal (CLK) is a clock signal extracted from said received modulated signal (SIG).

11. An integrated circuit (IC) according to claim 10, wherein said detection means (DM) comprise:
an Amplitude Shift Keying-ASK- demodulator (DEM1) configured to perform an ASK demodulation on said modulated signal (SIG) and to provide a first signal (SIG1), and
an On Off Keying - OOK - demodulator (DEM2) configured to perform an OOK demodulation on said modulated signal (SIG) and to provide a second signal (SIG2),
said first signal (SIG1) having transitions between a first state and a second state if said modulated signal (SIG) is modulated according to the protocol A, B or F,
said second signal (SIG2) transitions between said first state and said second state if said modulated signal (SIG) is modulated according to the protocol A or eventually according to the protocol F, and
wherein said detection means (DM) are configured to detect said protocol from both first and second signals (SIG1, SIG2).

12. An integrated circuit (IC) according to claim 11, wherein the second signal has said first state if the level of the modulated signal is greater than a first threshold and has said second state if the level of the modulated signal is lower than a second threshold, and wherein further comprises a blocking module (ST) coupled to the output of said OOK demodulator (DEM2) and configured to stop said clock signal (CLK) if said second signal (SIG2) has said second state and no longer stop said clock signal (CLK) during the reception of a non-modulated signal.

13. An integrated circuit (IC) according to claim 12, wherein said detection means (MD) are configured to detect said protocol among protocols A and F by determining the duration of said non-modulated signal.

14. An integrated circuit (IC) according to claim 11 or 12, wherein said detection means (MD) are configured to detect protocols B or F by analyzing said first signal (SIG1).

15. An integrated circuit (IC) according to one of the claims 10 to 14 in combination with claim 12, wherein if said second signal has said second state and detections means (DM) detect F protocol, said blocking module (ST) is configured to no longer stop said clock signal (CLK).

16. An integrated circuit (IC) according to one of the claims 10 to 15, wherein decoding means (DEC) comprise three decoders (DB, DF, DA), respectively intended to decode said data stream modulated according to protocols A, B and F, and said integrated circuit further comprises control means (MC) configured to activate decoder intended to decode data stream modulated according to protocol A before said detection means (DM) detect the protocol.

17. An integrated circuit (IC) according to claim 16, wherein if detection means (DM) detect A protocol, said blocking module (ST) is configured to stop said clock signal during reception of modulated pulses of said modulated signal, wherein the integrated circuit comprises memory means (MMA) configured to memorize said second signal (SIG2) corresponding to said modulated pulses, and the corresponding decoder (DA) will decode said data stream only during the reception of said non-modulated signal based on the memorized second signal.

18. An integrated circuit (IC) according to claim 16, wherein said control means (MC) are configured to activate the decoder intended to decode said data stream according to a detected protocol and to disable the other decoders.

19. Tag (TG), including an integrated circuit (IC) according to any one of claims 10 to 18.
